# FASCICULE DE BREVET EUROPEEN

(11) **EP 0 863 562 B1**
(45) Date de publication et mention de la délivrance du brevet: **23.01.2002**
(21) Numéro de dépôt: 98400524.9
(22) Date de dépôt: 05.03.1998
(51) Int. Cl.: H01M 4/52

(54) **Matière active positive pour électrode de nickel d'accumulateur à électrolyte alcalin**
Positives aktives Material für eine Nickelelektrode von alkalischer Batterie
Positive active material for alkaline battery nickel electrode

(30) Priorité: 06.03.1997 FR 9702673
(43) Date de publication de la demande: 09.09.1998
(73) Titulaire: ALCATEL, 75008 Paris (FR)
(72) Inventeur: Bernard, Patrick, 91300 Massy (FR); Baudry, Michelle, 16320 Le Pontaroux (FR)
(74) Mandataire: Laroche, Danièle

(56) Documents cités:
- EP-A- 0 833 397
- EP-A- 0 853 346
- US-A- 5 506 076
- PATENT ABSTRACTS OF JAPAN vol. 097, no. 004, 30 avril 1997 & JP 08 329937 A (MATSUSHITA ELECTRIC IND CO LTD), 13 décembre 1996,
- PATENT ABSTRACTS OF JAPAN vol. 096, no. 006, 28 juin 1996 & JP 08 045508 A (SUMITOMO METAL MINING CO LTD), 16 février 1996,

## Description

La présente invention concerne une matière active positive pour électrode de nickel d'un accumulateur à électrolyte alcalin. Elle s'étend en outre au procédé de préparation de cette matière active et à son utilisation pour la réalisation de l'électrode.

La plupart des applications récentes des accumulateurs à électrolyte alcalin obligent l'utilisateur à recharger ces accumulateurs à des températures supérieures à la température ambiante. C'est le cas par exemple lorsque ces accumulateurs participent à la traction d'un véhicule. Lorsque la température de charge est de l'ordre de 40°C à 60°C, le rendement de charge de l'électrode positive est mauvais, car la surtension de dégagement d'oxygène en fin de charge est faible.

Le brevet américain US-5 466 543 décrit une électrode pour accumulateur alcalin de type empâtée, apte à fonctionner dans un large domaine de température. La pâte contient une matière active et au moins un composé de l'yttrium, de l'indium, de l'antimoine, du baryum, du béryllium, ainsi qu'au moins un composé de cobalt ou de calcium.

La demande de brevet européen EP-0 634 804 propose une pâte comprenant un mélange de matières actives composé principalement d'hydroxyde de nickel et contenant au moins un élément choisi parmi le cobalt, l'hydroxyde de cobalt, l'oxyde de cobalt, le carbone ou le nickel et un composé pulvérulent d'au moins un élément choisi parmi Ca, Sr, Ba, Cu, Ag et Y.

Les rendements obtenus avec de telles électrodes restent insuffisants pour certaines applications. Ces faibles résultats sont liés à une répartition inadaptée des composés dans la pâte et à la formation d'amas qui rend une partie de ces additifs inefficace.

La présente invention a pour objet une matière active positive pour électrode de nickel d'accumulateur alcalin, constituée de particules d'hydroxyde contenant principalement du nickel, caractérisée par le fait que lesdites particules d'hydroxyde sont recouvertes d'une couche d'une phase de type hydrotalcite constituée d'un hydroxyde à base de nickel et d'yttrium, la proportion de ladite phase étant comprise entre 0,15% et 3% en poids d'yttrium exprimé en hydroxyde d'yttrium par rapport au poids total desdites particules.

Grâce à l'enrobage des particules d'hydroxyde par la couche de ladite phase, cette dernière est répartie de manière très homogène dans toute la matière active, ce qui ne peut pas être obtenu avec les mélanges de poudres de l'art antérieur. De plus, la phase peut exercer son influence sur chaque particule d'hydroxyde, avec une efficacité maximale.

Il est donc possible de minimiser la quantité de phase à mettre en oeuvre, ce qui permet à l'électrode de conserver un fort remplissage en matière électrochimiquement active, et donc une énergie volumique élevée.
Ainsi, à partir de 0.15 % en poids d'yttrium par rapport au poids total desdites particules, le rendement de la matière active est augmenté de façon significative, notamment en charge à température élevée.
Au delà de 3 % en poids, ce gain est annulé par la diminution de la proportion de matière électrochimiquement active, l'yttrium contenu dans ladite phase ne participant pas aux réactions électrochimiques.

De préférence ladite phase est de type hydrotalcite avec des paramètres de mailles indexés dans le système hexagonal a = 3,122 Å ± 0,01 Å et c = 7,567 Å ± 0,01 Å.

Ladite phase peut contenir en outre au moins un élément tel que le cobalt syncristallisé avec le nickel et l'yttrium.

De préférence, ladite phase contenant du nickel et de l'yttrium occupe en outre au moins partiellement la microporosité superficielle de ladite particule d'hydroxyde. Il s'agit là de la microporosité accessible à l'électrolyte et qui participe à la surface électrochimiquement active de l'hydroxyde.

Les particules d'hydroxyde peuvent prendre toutes les formes qui vont d'une forme plus ou moins sphérique à une forme complètement irrégulière.

Avantageusement J'hydroxyde desdites particules contient en outre en solution solide au moins un hydroxyde choisi parmi les hydroxydes de cobalt, d'aluminium, de fer, de cuivre, de chrome et de manganèse et au moins un hydroxyde choisi parmi les hydroxydes de cadmium, de zinc et de magnésium. Dans ce cas, les particules d'hydroxyde contiennent toujours majoritairement du nickel et le plus souvent une proportion mineure, ne dépassant pas 20 %, d'hydroxyde d'un ou plusieurs autres éléments syncristallisés. La structure cristalline de l'hydroxyde n'est pas modifiée.

La présente invention a également pour objet un procédé de fabrication de la matière active précédente comprenant les étapes suivantes :
- on prépare une solution contenant des ions yttrium et des ions nitrate,
- on immerge lesdites particules d'hydroxyde dans ladite solution,
- on sépare lesdites particules de ladite solution et on égoutte lesdites particules,
- on immerge lesdites particules d'hydroxyde dans une solution alcaline,
- on sépare lesdites particules de ladite solution alcaline,
- on lave lesdites particules avec de l'eau et on les sèche.

Bien entendu on entend par particules d'hydroxyde, des particules dont l'hydroxyde contient principalement du nickel, mais aussi les hydroxydes syncristallisés précités.

Ladite solution contenant des ions yttrium est de préférence une solution de nitrate d'yttrium, mais peut être choisie parmi un mélange d'une solution de nitrate de potassium, de sodium ou de lithium et d'une solution de sulfate, de chlorure ou d'acétate d'yttrium.

Ladite solution alcaline est de préférence choisie parmi une solution de soude caustique (hydroxyde de sodium NaOH), une solution de potasse (hydroxyde de potassium KOH) et une solution de lithine (hydroxyde de lithium LiOH).

Un temps de contact avec la solution alcaline compris entre 30 minutes et 5 heures est suffisant, mais la durée de l'immersion peut atteindre 48 heures sans inconvénient.

La température de séchage est comprise entre 40°C et 110°C pendant une durée comprise entre 12 heures et 48 heures.

La présente invention a également pour objet une électrode positive d'accumulateur alcalin faisant application de la matière active précédentes ; une telle électrode comprend un support conducteur et une pâte contenant un liant, un matériau conducteur pulvérulent et la matière active selon l'invention.

Ledit support est un support conducteur tridimensionnel poreux tel qu'une mousse de nickel.

Ledit liant comprend au moins un composé choisi parmi la carboxyméthylcellulose CMC, l'hydroxyéthylcellulose HEC, l'hydroxypropylméthylcellulose HPMC, et au moins un composé choisi parmi le polytétrafluoroéthylène PTFE et le polyfluorure de vinylidène PVDF.

Ledit matériau conducteur pulvérulent est choisi parmi le cobalt métallique Co, un hydroxyde de cobalt Co(OH)₂, un oxyde de cobalt CoO et leurs mélanges.

Une électrode selon l'invention peut être utilisée dans tout accumulateur alcalin, et en particulier les accumulateurs ayant des électrodes négatives au cadmium ou en alliage hydrurable.

D'autres caractéristiques et avantages de la présente invention apparaîtront au cours des exemples suivants de réalisation, donnés bien entendu à titre illustratif et non limitatif, et dans le dessin annexé sur lequel :
- La figure 1 représente une vue schématique partielle en coupe d'une électrode de type empâtée comprenant des particules d'hydroxyde enrobées par une phase formée d'un hydroxyde à base de nickel et d'yttrium selon la présente invention,
- La figure 2 montre une vue en coupe schématique agrandie d'une particule d'hydroxyde enrobée par une phase formée d'un hydroxyde à base de nickel et d'yttrium selon la présente invention.

### Exemple 1 :

On fabrique une électrode de nickel standard A selon l'art antérieur à partir d'un support conducteur qui est une mousse de nickel de porosité environ 95 % et d'une pâte.

La composition pondérale de la pâte est la suivante :
- Matière électrochimiquement active pulvérulente constituée d'un hydroxyde composé de 93 % en poids d'hydroxyde de nickel, 4 % en poids d'hydroxyde de zinc et 3 % en poids d'hydroxyde de cobalt syncristallisés : 66 %
- Matériau conducteur constitué d'un mélange de poudres de cobalt Co(OH)₂ et de cobalt métallique : 7 %
- Liant constitué d'un mélange d'un liant cellulosique et de PTFE 1,6 %
- Eau : 25,4 %
Une fois la pâte introduite dans le support, l'électrode est séchée afin d'en éliminer l'eau.

### Exemple 2 :

On prépare une poudre de matière électrochimiquement active selon la présente invention de la manière suivante. Une poudre d'hydroxyde composée de 93 % en poids d'hydroxyde de nickel, 4 % en poids d'hydroxyde de zinc et 3 % en poids d'hydroxyde de cobalt syncristallisés, est mise en suspension dans une solution d'acétate d'yttrium de concentration 0,25M et maintenue à 80°C. La poudre est laissée au contact de la solution durant environ 6 heures. Les particules sont alors égouttées pour éliminer l'excédent de solution. Puis la poudre est immergée dans une solution de soude caustique NaOH de concentration 1,5M à température ambiante pendant 1 heure. La poudre est enfin lavée à température ambiante par de l'eau distillée tamponnée à pH9 puis séchée à une température de l'ordre de 70°C. On obtient par cette méthode des particules de l'hydroxyde de départ enrobées par une couche d'hydroxyde d'yttrium, dont l'yttrium représente 0,4 % en poids du total de la particule finale. On fabrique avec cette matière active une électrode B analogue à celle préparée dans l'exemple 1.

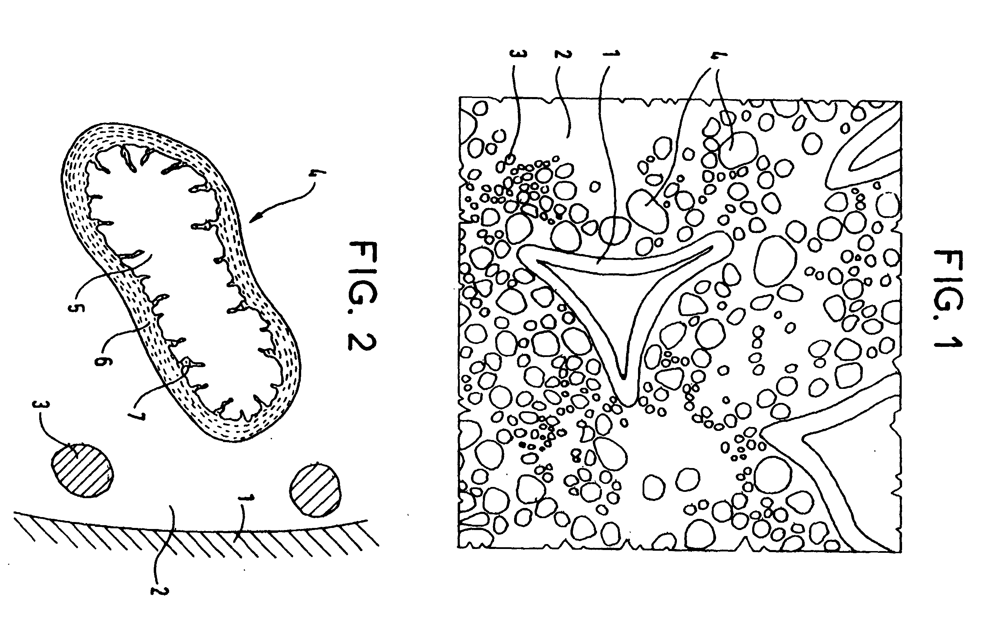

La figure 1 montre une vue schématique partielle en coupe d'une telle électrode. On y distingue le support conducteur poreux 1 rempli de pâte contenant le liant 2, la poudre de matériau conducteur 3 et les particules de matière électrochimiquement active 4. Sur la figure 2 qui est une vue en coupe schématique agrandie d'une particule de matière active 4 selon l'invention, on observe la particule d'hydroxyde de départ 5 qui est enrobée d'une couche 6 continue d'une phase constituée d'un hydroxyde à base de nickel et d'yttrium, la couche pénétrant partiellement dans la porosité superficielle 7 de l'hydroxyde 5.

### Exemple 3 :

On prépare une autre poudre de matière électrochimiquement active selon la présente invention de la manière suivante. Une poudre d'hydroxyde composée de 93 % en poids d'hydroxyde de nickel, 4 % en poids d'hydroxyde de zinc et 3 % en poids d'hydroxyde de cobalt syncristallisés, est mise en suspension dans une solution de nitrate d'yttrium de concentration 0,006M et maintenue à 80°C. La poudre est laissée au contact de la solution durant environ 5 heures. Les particules sont alors égouttées pour éliminer l'excédent de solution. Puis la poudre est immergée dans une solution de soude caustique NaOH de concentration 1,5M à température ambiante pendant 1 heure. La poudre est enfin lavée à température ambiante par de l'eau distillée tamponnée à pH9 puis séchée à une température de l'ordre de 70°C. On obtient par cette méthode des particules de l'hydroxyde de départ enrobées par une couche d'une phase de type hydrotalcite constituée d'un hydroxyde à base de nickel et d'yttrium, dont l'yttrium représente 0,4 % en poids du total de la particule finale.

On fabrique avec cette matière active une électrode C analogue à celle préparée dans l'exemple 1.

### Exemple 4 :

On prépare une poudre de matière électrochimiquement active selon la présente invention, avec la méthode décrite dans l'exemple 3, mais en utilisant une solution de nitrate d'yttrium de concentration 0,025M.

On obtient par cette méthode des particules de l'hydroxyde de départ enrobées par une couche d'une phase de type hydrotalcite constituée d'un hydroxyde à base de nickel et d'yttrium, dont l'yttrium représente 0,65 % en poids du total de la particule finale.

On fabrique avec cette matière active une électrode D analogue à celle préparée dans l'exemple 1.

### Exemple 5 :

On prépare une poudre de matière électrochimiquement active selon la présente invention selon la méthode décrite dans l'exemple 3 en utilisant une solution de nitrate d'yttrium de concentration 0,2M.

On obtient par cette méthode des particules de l'hydroxyde de départ enrobées par une couche d'une phase de type hydrotalcite constituée d'un hydroxyde à base de nickel et d'yttrium, dont l'yttrium représente 1,5 % en poids du total de la particule finale.

On fabrique avec cette matière active une électrode E analogue à celle préparée dans l'exemple 1.

### Exemple 6 :

On assemble des accumulateurs nickel-hydrure métallique Ni-MH étanches comportant respectivement l'une des électrodes A, C, D, E précédemment préparées. Chaque électrode positive est accolée à une électrode négative surcapacitive à alliage hydrurable de type connu. Les électrodes positives et négatives sont séparées par une couche de polypropylène non-tissé. Le faisceau est alors imprégné d'un électrolyte alcalin qui est une solution aqueuse de potasse KOH 7,4N, de lithine LiOH 0,5N et de soude caustique NaOH 0,4N.

Après un repos de 48 heures, les accumulateur sont testés en cyclage à 20°C dans les conditions suivantes, où lc représente le régime théorique nécessaire pour décharger l'accumulateur en une heure :

| | |
|---|---|
| Cycle 1 | Charge à 0.1 lc pendant 16 heures Décharge à 0.2 lc jusqu'à une tension d'arrêt de 0.9 volt; |
| Cycle 2 | Charge à 0.1 pendant 16 heures Décharge à 0.2 lc jusqu'à une tension de 1 volt ; |
| Cycles 3 à 12 | identiques au cycle 2 et réalisés à 20°C ; |
| Cycle 13 | Charge à 0.1 lc pendant 16 heures à 45°C Décharge à lc jusqu'à une tension d'arrêt de 1 volt ; |
| Cycle 14 | Charge à 0.1 lc pendant 16 heures à 50°C Décharge à lc jusqu'à une tension d'arrêt de 1 volt. |

Les rendements calculés sont rassemblés dans le tableau 1 ci-dessous.

**TABLEAU I**

| Rendements en mAh/g | A | C | D | E |
|---|---|---|---|---|
| Cycle 1 | 220 | 217 | 220 | 216 |
| Cycle 2 | 221 | 221 | 223 | 221 |
| Cycle 13 | 146 | 185 | 201 | 208 |
| Cycle 14 | 104 | 118 | 136 | 189 |

L'accumulateur contenant l'électrode A présente une perte de capacité entre 20°C et 45°C de 34 %, et entre 20°C et 50°C de 53 %.

Par rapport à l'accumulateur contenant l'électrode A de l'art antérieur, le rendement de l'accumulateur contenant l'électrode C selon l'invention est supérieur de 26 % à 45°C et de 13 % à 50°C.

Par rapport à l'accumulateur contenant l'électrode A de l'art antérieur, le rendement de l'accumulateur contenant l'électrode E selon l'invention est supérieur de 42 % à 45°C et de 82 % à 50°C.

Bien entendu, la présente invention n'est pas limitée aux modes de réalisation décrits dans les exemples, mais elle est susceptible de nombreuses variantes accessibles à l'homme de l'art. En particulier, on pourra sans sortir du cadre de l'invention modifier la composition de l'hydroxyde et la nature des éléments syncristallisés. On pourra modifier la composition de la phase hydrotalcite à base de nickel et d'yttrium en y incorporant d'autres éléments syncristallisés tel que le cobalt. On pourra également envisager l'utilisation d'un support conducteur d'électrode de nature et de structure différente comme un support métallique ou en matériau carboné, par exemple un feutre, une mousse, un déployé ou un feuillard perforé. Enfin, les différents ingrédients entrant dans la réalisation de la pâte, ainsi que leurs proportions relatives, pourront être changés. Notamment des additifs destinés à faciliter la mise en forme de l'électrode, comme un épaississant ou un stabilisateur de texture, pourront y être incorporés dans des proportions mineures.

## Revendications

1. Matière active positive pour électrode de nickel d'accumulateur alcalin constituée /de particules d'hydroxyde contenant principalement du nickel, **caractérisée par le fait que** lesdites particules d'hydroxyde sont recouvertes d'une couche d'une phase de type hydrotalcite constituée d'un hydroxyde de nickel et d'yttrium, la proportion de ladite phase étant comprise entre 0,15% et 3% en poids d'yttrium exprimé en hydroxyde d'yttrium par rapport au poids total.

2. Matière active selon la revendication 1, dans laquelle ladite phase est de type hydrotalcite avec des paramètres de mailles indexés dans le système hexagonal a = 3.122Å ± 0.01Å et c = 7,567Å ± 0,01Å.

3. Matière active selon l'une des revendications 1 et 2, dans laquelle ladite phase contient un élément tel que le cobalt syncristallisé avec le nickel et l'yttrium.

4. Matière active selon l'une des revendications 1 à 3, dans laquelle ladite couche occupe en outre au moins partiellement la microporosité superficielle desdites particules d'hydroxyde.

5. Matière active selon l'une des revendications 1 à 4, dans laquelle l'hydroxyde desdites particules contient en outre en solution solide au moins un hydroxyde choisi parmi les hydroxydes de cobalt, d'aluminium, de fer, de cuivre, de chrome et de manganèse et au moins un hydroxyde choisi parmi les hydroxydes de cadmium, de zinc et de magnésium, dans une proportion ne dépassant pas 20%.

6. Procédé de fabrication de la matière active selon l'une des revendications précédentes, **caractérisé par le fait qu'**il comprend les étapes suivantes :
- on prépare une solution contenant des ions yttrium et des ions nitrate,
- on immerge lesdites particules d'hydroxyde dans ladite solution,
- on sépare lesdites particules de ladite solution et on égoutte lesdites particules,
- on immerge lesdites particules d'hydroxyde dans une solution alcaline,
- on sépare lesdites particules de ladite solution alcaline,
- on lave lesdites particules avec de l'eau et on les sèche.

7. Procédé de fabrication selon la revendication 6, **caractérisé par le fait que** ladite solution contenant les ions yttrium et des ions nitrates est choisie parmi une solution de nitrate d'yttrium, un mélange d'une solution de nitrate de potassium, de sodium ou de lithium et d'une solution de sulfate, de chlorure ou d'acétate d'yttrium.

8. Procédé de fabrication selon l'une des revendications 6 et 7, dans lequel ladite solution alcaline est choisie parmi une solution de soude caustique, une solution de potasse et une solution de lithine.

9. Procédé de fabrication selon l'une des revendications 6 à 8, dans lequel le temps d'immersion desdites particules d'hydroxyde dans ladite solution alcaline est compris entre 30 minutes et 5 heures.

10. Procédé de fabrication selon l'une des revendications 6 à 9, dans lequel le séchage desdites particules est effectuée à une température comprise entre 40°C et 110°C pendant une durée comprise entre 12 heures et 48 heures.

11. Utilisation de la matière active selon l'une des revendications 1 à 5 dans une électrode dont le support conducteur est une mousse de nickel.

12. Utilisation selon la revendication 11, **caractérisée par le fait que** ladite électrode contient un liant comprenant au moins un composé choisi parmi la carboxyméthylcellulose CMC, l'hydroxyéthylcellulose HEC, l'hydroxypropylméthylcellulose HPMC, et au moins un composé choisi parmi le polytétrafluoroéthylène PTFE et le polyfluorure de vinylidène PVDF.

## Claims

1. A positive active material for nickel electrodes of alkaline storage batteries consisting of particles of hydroxide containing mainly nickel **characterized in that** said particles of hydroxide are covered with a layer of a hydrotalcite type phase consisting of a hydroxide based on nickel and yttrium, the proportion of said phase being in the range 0.15% to 3% by weight of yttrium expressed as yttrium hydroxide relative to the total weight.

2. An active material according to claim 1 wherein said phase is of the hydrotalcite type with indexed lattice parameters in the hexagonal system a = 3.122 Å ± 0.01 Å and c = 7.567 Å ± 0.01 Å.

3. An active material according to either claim 1 or claim 2 wherein said phase contains an element such as cobalt co-crystallized with the nickel and the yttrium.

4. An active material according to any of claims 1 to 3 wherein said layer also occupies at least part of the surface microporosity of said hydroxide particles.

5. An active material according to any of claims 1 to 4 wherein the hydroxide of said particles further contains in solid solution at least one hydroxide selected from the hydroxides of cobalt, aluminium, iron, copper, chromium and manganese and at least one hydroxide selected from the hydroxides of cadmium, zinc and magnesium, in a proportion not exceeding 20%.

6. A method of manufacturing an active material according to any preceding claim **characterized in that** it comprises the following steps:
- a solution is prepared containing yttrium ions and nitrate ions,
- said hydroxide particles are immersed in said solution,
- said particles are separated from said solution and said particles are drained,
- said hydroxide particles are immersed in an alkaline solution,
- said particles are separated from said alkaline solution, and
- said particles are washed with water and dried.

7. A manufacturing method according to claim 6 **characterized in that** said solution containing yttrium ions and nitrate ions is selected from a solution of yttrium nitrate, a mixture of a solution of potassium nitrate, sodium nitrate or lithium nitrate and a solution of yttrium sulphate, yttrium chloride or yttrium acetate.

8. A manufacturing method according to either claim 6 or claim 7 wherein said alkaline solution is chosen from a sodium hydroxide solution, potassium hydroxide solution and lithium hydroxide solution.

9. A manufacturing method according to any of claims 6 to 8 wherein the immersion time of said hydroxide particles in said alkaline solution is in the range 30 minutes to five hours.

10. A manufacturing method according to any of claims 6 to 9 wherein said particles are dried at a temperature in the range 40°C to 110°C for a time in the range 12 hours to 48 hours.

11. A use of the active material according to any of claims 1 to 5 in an electrode wherein the conductive support is a nickel sponge.

12. A use according to claim 11 **characterized in that** said electrode contains a binder comprising at least one compound selected from carboxymethylcellulose CMC, hydroxyethylcellulose HEC, hydroxypropylmethylcellulose HPMC and at least one compound chosen from polytetrafluoroethylene PTFE and polyvinylidene fluoride PVDF.

## Patentansprüche

1. Positives aktives Material für eine Nickelelektrode für einen alkalischen Akkumulator, die aus Hydroxidteilchen besteht, die hauptsächlich Nickel enthalten, **dadurch gekennzeichnet, dass** die Hydroxidteilchen mit einer Schicht mit einer Phase vom Hydrotalkit-Typ bedeckt sind, die aus einem Nickel- und Yttriumhydroxid besteht, wobei der Prozentsatz der Phase zwischen 0,15 und 3 Gew.-% Yttrium liegt, ausgedrückt in Yttriumhydroxid im Verhältnis zum Gesamtgewicht.

2. Aktives Material nach Anspruch 1, bei welchem die Phase vom Typ Hydrotalkit mit Lochparametern (paramètres de mailles) ist, die im hexagonalen System mit a = 3,122 Å ± 0,01 Å und c = 7,567 Å ± 0,01 Å indiziert sind.

3. Aktives Material nach einem der Ansprüche 1 und 2, bei welchem die Phase ein Element wie Cobalt enthält, das mit dem Nickel und dem Yttrium synkristallisiert ist.

4. Aktives Material nach einem der Ansprüche 1 bis 3, bei welchem die Schicht außerdem mindestens teilweise die oberflächlichen Mikroporen der Hydroxidteilchen einnimmt.

5. Aktives Material nach einem der Ansprüche 1 bis 4, bei welchem das Hydroxid der Teilchen außerdem in fester Lösung wenigstens ein Hydroxid, das unter den Hydroxiden von Cobalt, Aluminium, Eisen, Kupfer, Chrom und Mangan ausgewählt ist, und ein Hydroxid, das unter den Hydroxiden von Cadmium, Zink und Magnesium ausgewählt ist, in einem Prozentsatz enthalten ist, der 20% nicht übersteigt.

6. Verfahren zur Herstellung des aktiven Materials nach einem der vorhergehenden Ansprüche, **dadurch gekennzeichnet, dass** es die folgenden Schritte umfasst:
- es wird eine Lösung hergestellt, die Yttriumionen und Nitrationen enthält,
- die Hydroxidteilchen werden in die Lösung getaucht,
- die Teilchen werden von der Lösung getrennt und die Teilchen werden abtropfen gelassen,
- die Hydroxidteilchen werden in eine alkalische Lösung getaucht,
- die Teilchen werden von der alkalischen Lösung getrennt,
- die Teilchen werden mit Wasser gewaschen und sie werden getrocknet.

7. Herstellungsverfahren nach Anspruch 6, **dadurch gekennzeichnet, dass** die Lösung, die Yttriumionen und Nitrationen enthält, aus einer Yttriumnitratlösung, einer Mischung aus einer Kalium-, Natrium- oder Lithiumnitratlösung und einer Yttriumsulfat-,-chlorid- oder -acetatlösung ausgewählt ist.

8. Herstellungsverfahren nach einem der Ansprüche 6 und 7, bei dem die alkalische Lösung aus einer Lösung von kaustischer Soda, einer Kalisalzlösung und einer Lithiumhydroxidlösung ausgewählt ist.

9. Herstellungsverfahren nach einem der Ansprüche 6 bis 8, bei dem die Tauchzeit für die Hydroxidteilchen in der alkalischen Lösung zwischen 30 Minuten und 5 Stunden liegt.

10. Herstellungsverfahren nach einem der Ansprüche 6 bis 9, bei dem die Trocknung der Teilchen bei einer Temperatur zwischen 40°C und 110°C während einer Dauer zwischen 12 Stunden und 48 Stunden ausgeführt wird.

11. Verwendung des aktiven Materials nach einem der Ansprüche 1 bis 5 in einer Elektrode, deren leitfähiger Träger ein Nickelschaum ist.

12. Verwendung nach Anspruch 10, **dadurch gekennzeichnet, dass** die Elektrode ein Bindemittel enthält, das wenigstens eine Verbindung, die aus Carboxymethylcellulose CMC, Hydroxyethylcellulose HEC, Hydroxypropylmethylcellulose ausgewählt ist, und wenigstens eine Verbindung umfasst, die aus Polytetrafluorethylen PTFE und Polyvinylidenfluorid PVDF ausgewählt ist.
